Europäisches Patentamt

(19) European Patent Office

Office européen des brevets

(11) Numéro de publication: **0 015 823**
**A1**

(12) # DEMANDE DE BREVET EUROPEEN

(21) Numéro de dépôt: 80400267.3

(22) Date de dépôt: 26.02.80

(51) Int. Cl.³: **A 01 F 25/20,** E 02 F 3/81

(30) Priorité: 28.02.79 FR 7905690

(71) Demandeur: **Lucas, Gustave, 10, rue La Croix du Marché La Verrie, F-85130 La Guimbretiere (FR)**

(43) Date de publication de la demande: **17.09.80 Bulletin 80/19**

(72) Inventeur: **Lucas, Gustave, 10, rue La Croix du Marché La Verrie, F-85130 La Guimbretiere (FR)**

(74) Mandataire: **Phelip, Bruno et al, c/o Cabinet HARLE & LECHOPIEZ 21, rue de La Rochefoucauld, F-75009 Paris (FR)**

(84) Etats contractants désignés: **BE DE FR GB IT NL**

(54) **Machine à désiler et à distribuer un produit stocké notamment en silo horizontal.**

(57) L'invention concerne une machine à désiler équipée d'un organe de prèlévement extensible.

La machine comporte une benne 1 munie d'une ouverture d'entrée 2, d'un transporteur d'évacuation 3 et d'un distributeur-foisonneur 4, ladite machine comportant en outre un bras de prèlévement télescopique articulé autour d'un axe 8 et composé d'un arbre 11 sur lequel est monté coulissant un moyeu tubulaire 14 portant un disque de coupe 12 à son extrémité et une vis de déchargement 13 s'étendant en arrière du disque.

Application au désilage, notamment de produits d'alimentation de bétail.

" Machine à désiler et à distribuer un produit
stocké notamment en silo horizontal "

L'invention concerne une machine à désiler et à distribuer un produit stocké notamment en silo horizontal, tel qu'un produit d'alimentation du bétail.

Sur des machines à désiler classiques connues actuellement, du type de celle décrite dans le brevet FR 2.134.923, l'organe de prélèvement est essentiellement constitué par un rotor orienté transversalement, parallèlement au front de taille du produit à désiler. Avec ce type de machine, la profondeur de passe de l'outil est limitée au rayon du rotor, et lorsque celui-ci a prélevé le produit dans la zone où il se déplace, il est nécessaire de déplacer la machine d'une distance égale à la profondeur de passe de manière à pouvoir attaquer à nouveau la masse de produit à désiler.

Des machines à désiler plus perfectionnées, du type de celle décrite dans le brevet FR 2.231.302, comportent des rotors de prélèvement orientés longitudinalement, perpendiculairement au front de taille du produit à désiler. Avec ce type de machine, la profondeur de passe permise est plus importante du fait que les rotors travaillent en

0015823

bout et peuvent pénétrer dans la masse de produit sur toute leur longueur. Néanmoins, du fait que pour des raisons d'encombrement et de poids il n'est pas possible d'augmenter démesurément la longueur de ces rotors, la profondeur de passe obtenue reste encore très limitée et il est toujours nécessaire de déplacer à plusieurs reprises ces désileuses pour prélever la totalité du produit ensilé.

Une machine à désiler d'un autre type a également été proposée, notamment dans le brevet FR 2.112.272, l'organe de prélèvement de ce type de machine étant essentiellement constitué par un outil de fraisage rotatif monté à l'extrémité d'un bras articulé, mobile aussi bien verticalement qu'horizontalement. L'organe de prélèvement de ce type de machine peut pénétrer plus profondément à l'intérieur de la masse de produit ensilé, car il est possible de réaliser aisément des bras de grandes longueurs. Toutefois, ces machines ne comportant aucun moyen pour amener le produit découpé par l'outil de fraisage jusqu'à la benne de la machine, le bras de prélèvement doit conserver une longueur réduite de telle sorte que l'outil de coupe travaille dans une zone située à proximité de la désileuse, ce qui limite évidemment considérablement sa profondeur de passe.

En outre, sur toutes ces machines à désiler connues actuellement, le produit désilé est redistribué tel quel sur les lieux d'utilisation; aussi, lorsqu'il s'agit notamment de fourrage, il est généralement nécessaire de reprendre le produit pour le foisonner et l'éparpiller.

Le but de la présente invention est donc de proposer une machine à désiler qui comporte un organe de prélèvement susceptible de pénêtrer profondément à l'intérieur du silo dans la masse du produit prélevé et capable de ramener celui-ci vers la machine sans avoir à la déplacer, la désileuse selon l'invention permettant ensuite de décharger le produit tout en le foisonnant et en l'éparpillant en une seule opération.

La machine à désiler selon l'invention comporte une benne de transport, au moins un organe de prélèvement du produit à désiler articulé sur la benne de transport, des moyens de chargement du produit dans la benne, ainsi que des moyens de distribution de celui-ci sur les lieux de déchargement, l'organe de prélèvement étant extensible et portant les moyens de chargement du produit dans la benne, tandis que les moyens de distribution du produit comportent un hérisson d'épandage.

Selon un premier mode de réalisation de l'invention, l'organe de prélèvement est essentiellement constitué par un bras télescopique articulé sur la benne à une extrémité et muni à son autre extrémité d'un disque de coupe rotatif, des moyens étant prévus pour commander l'extension et la rétraction dudit bras.

Préférentiellement, avec un tel organe télescopique, les moyens de chargement associés sont constitués par une vis d'Archimède montée sur le bras télescopique et tournant avec le disque de coupe.

Selon un deuxième mode de réalisation de l'invention, l'organe de prélèvement est essentiellement constitué par un bras formé de plusieurs parties articulées entre elles, ledit bras étant articulé sur la benne à une extrémité et muni d'un disque de coupe rotatif à son autre extrémité, des moyens étant prévus pour déployer et rétracter les différentes parties articulées. Les moyens de chargement associés peuvent être constitués soit par une vis d'Archimède rotative, soit par une herse ou rateau portée en arrière du disque de coupe, par la partie la plus extérieure du bras de prélèvement.

Selon une forme de réalisation préférée, le rateau ou herse de ramassage du produit découpé est prévu rétractable et escamotable derrière les organes de coupe.

Selon l'invention, les moyens de déchargement de la machine à désiler sont essentiellement constitués par un distributeur éparpilleur du type hérisson à dents ou griffes rétractables. Ce distributeur est composé essentiellement d'un tambour rotatif dont la virole comporte des perforations, et d'un peigne logé à l'intérieur du tambour et monté tournant autour d'un axe fixe parallèle à l'axe du tambour et excentré par rapport à celui-ci, les dents dudit peigne étant engagées dans les perforations de la virole de manière à pouvoir successivement sortir puis se rétracter au cours de la rotation de celle-ci.

L'invention va maintenant être décrite plus en détail en se référant à des modes de réalisation particuliers cités à titre d'exemples non limitatifs et représentés sur les dessins annexés, dans lesquels :

Fig. 1 représente une vue schématique de côté d'une machine à désiler selon un premier mode de réalisation de l'invention,

Fig. 2 représente une vue de dessus sché-

0015823

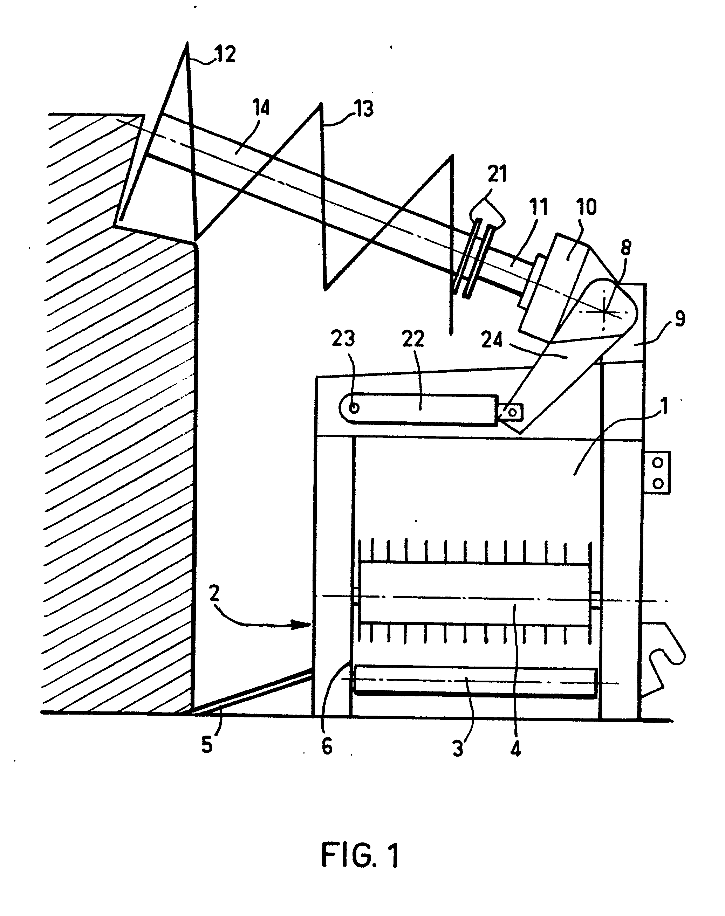

matique de la machine de la figure 1,

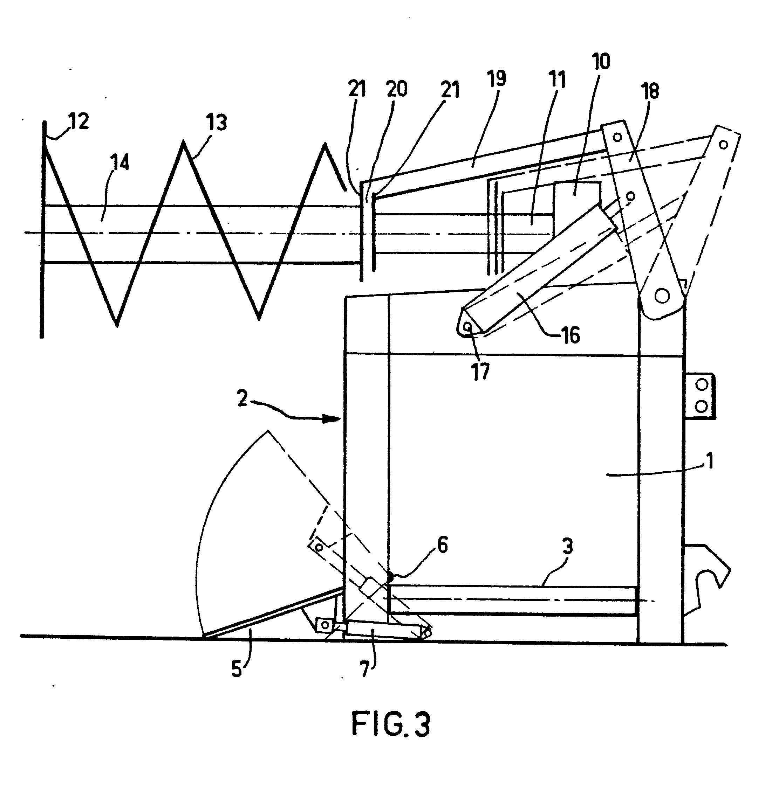

Fig. 3 est une vue schématique de profil de la machine de la figure 1 montrant les mécanismes d'extension ou de rétraction des organes de prélèvement,

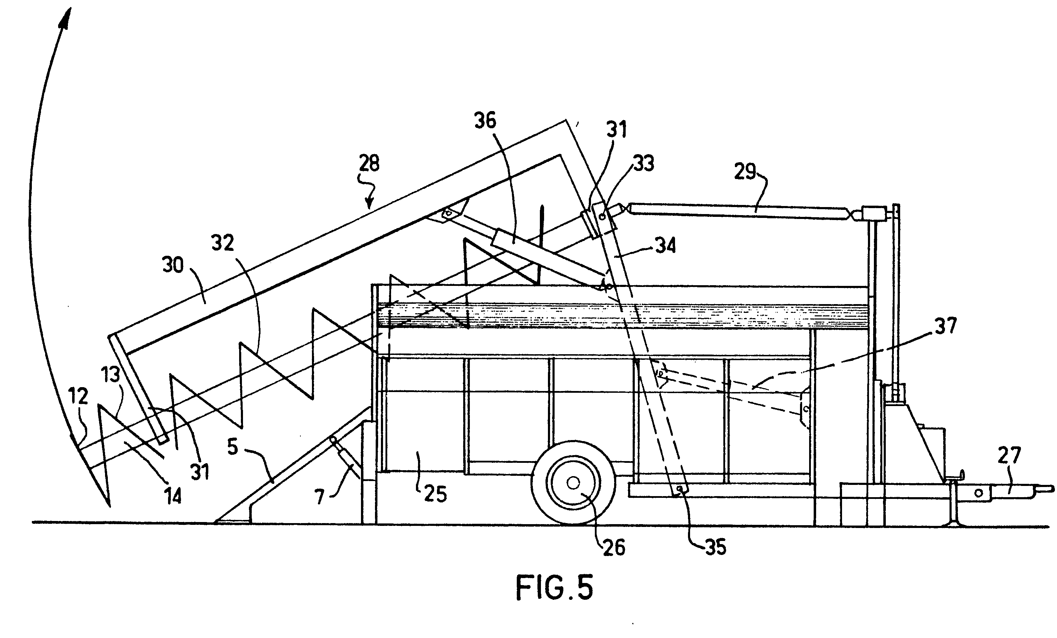

Fig. 4 représente une vue arrière des dispositifs de coupe,

Fig. 5 représente schématiquement une remorque équipée d'un organe de prélèvement selon un second mode de réalisation de l'invention,

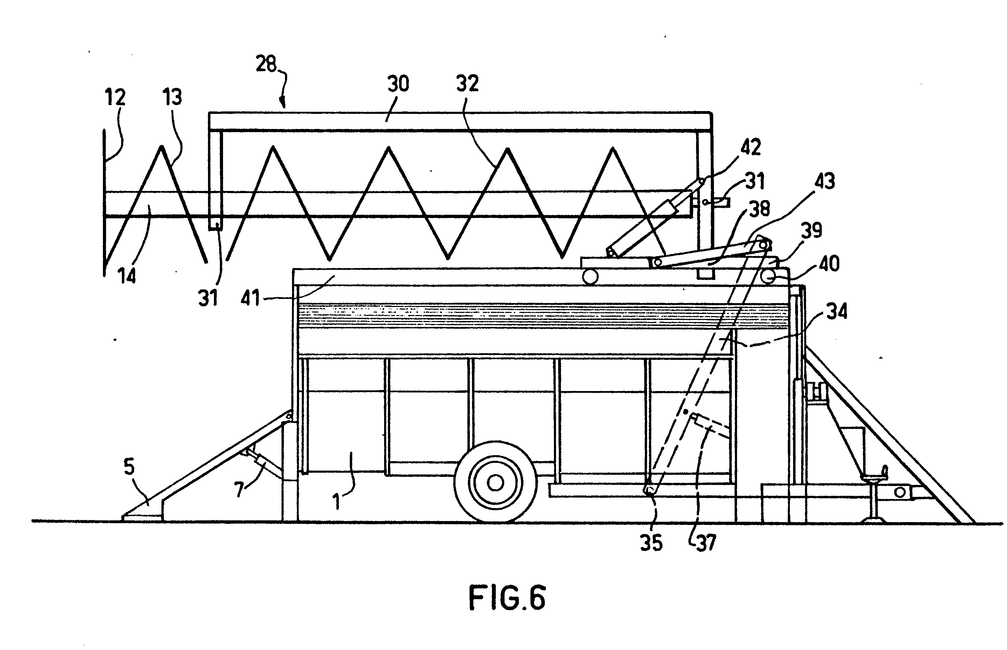

Fig. 6 représente une première variante de l'organe de prélèvement selon le second mode de réalisation de la figure 5,

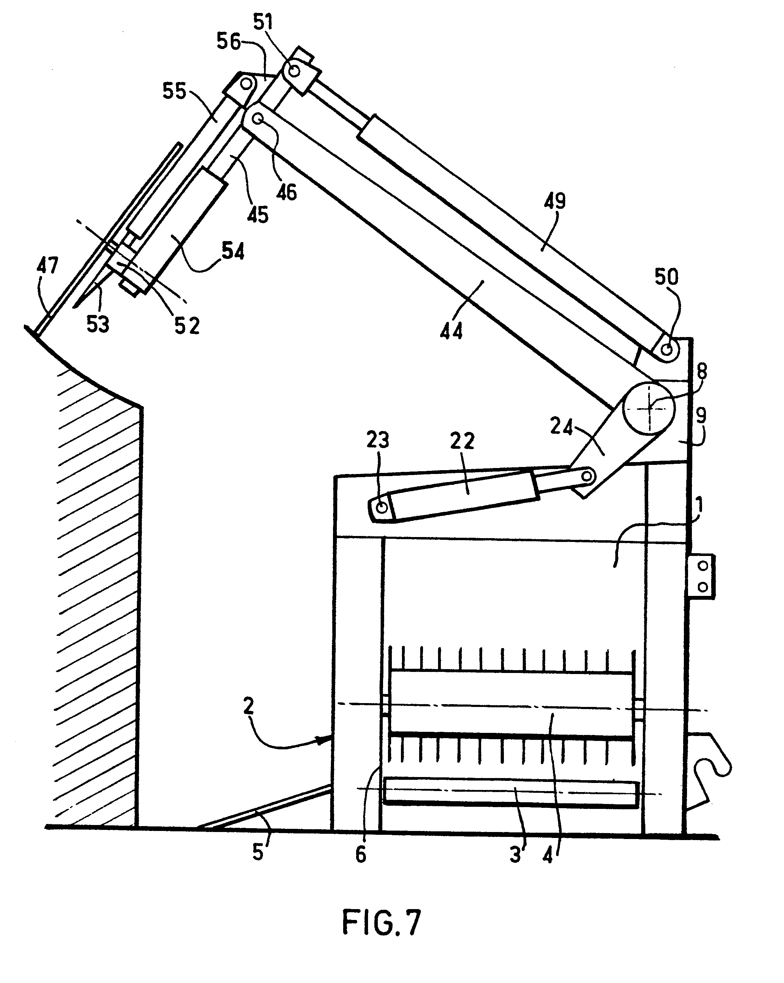

Fig. 7 représente une seconde variante de l'organe de prélèvement selon le deuxième mode de réalisation, ledit organe équipant la benne de transport représentée sur la figure 1,

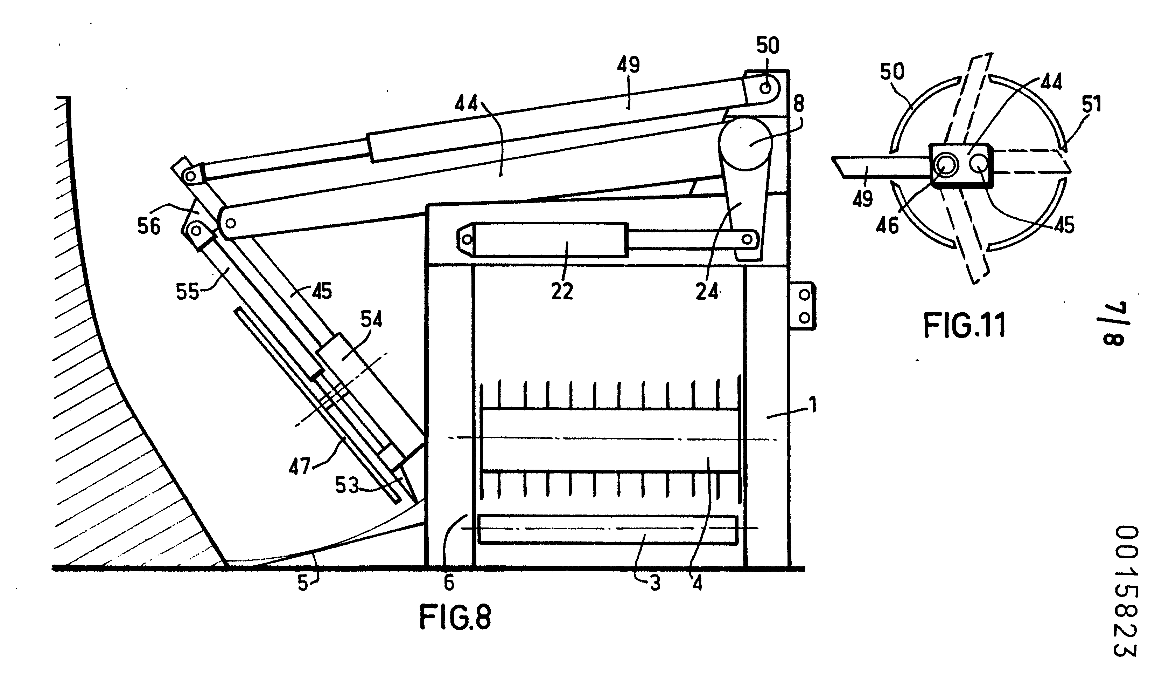

Fig. 8 représente en position rétractée l'organe de prélèvement de la figure 7,

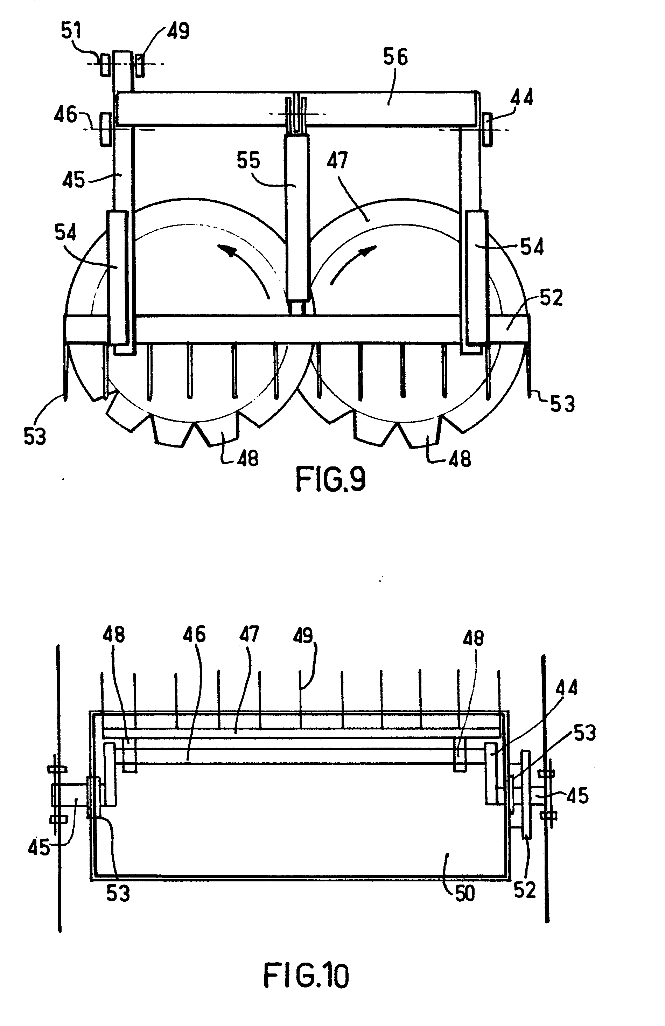

Fig. 9 représente une vue arrière de l'extrémité de l'organe de prélèvement représenté sur les figures 7 et 8,

Fig. 10 représente schématiquement en coupe longitudinale le dispositif distributeur-éparpilleur de la machine selon l'invention,

Fig. 11 représente une coupe transversale du dispositif distributeur-éparpilleur de la figure 10.

Telle que représentée sur les figures 1, 2 et 3, la machine à désiler selon l'invention se compose d'une benne 1 de forme parallélipipédique destinée à être fixée sur un dispositif d'attelage trois points d'un tracteur. La paroi de la benne opposée au tracteur comporte un orifice d'entrée 2 par lequel s'effectue le chargement. Le fond de la benne est équipé d'un tapis transporteur 3 orienté transversalement, et à la sortie du transporteur est disposé un dispositif distributeur-éparpilleur 4 dénommé"hérisson".

A la partie inférieure de l'orifice de chargement 2 est articulée une porte rabattable 5 pouvant pivoter autour d'un axe horizontal 6 sous l'action d'un vérin hydraulique 7. L'axe de rotation 6 est situé au niveau du plan de translation supérieur du tapis transporteur 3 de telle sorte que la porte 5 constitue en position rabattue une rampe inclinée ou tremplin favorisant la montée du produit désilé dans la benne. L'arrête de la porte reposant sur le sol peut être dentelée pour faciliter une légère pénétration à l'intérieur du silo, ladite porte,en position relevée, permettant d'éviter la chute du produit contenu dans la benne pendant le transport.

Parallèlement à l'arête supérieure de la benne située du côté du tracteur, est monté un axe horizontal 8 tourillonnant sur deux paliers 9 soudés sur ladite arête. Sur cet axe est placée une traverse basculante 10 dans laquelle s'implante un ou plusieurs bras de prélèvement du produit portant des outils de coupe et des moyens de chargement du produit à désiler.

Les outils de coupe sont de préférence constitués par des disques dentelés 12 montés en bout des bras de prélèvement, les moyens de chargement prévus dans le mode de réalisation représenté sur les figures 1 à 3 étant constitués par une vis d'Archimède 13 s'étendant en arrière du disque de coupe 12 autour du bras de prélèvement.

Les disques de coupe 12 sont dégagés en leur centre (voir figure 4) afin de faciliter la pénétration du produit dans la vis 13, les disques 12 étant découpés sur leur pourtour de manière à former des dents et constituer ainsi des sortes de scies circulaires. Les couronnes dentelées ainsi réalisées sont reliées chacune à un moyeu 14 par l'intermédiaire de bras radiaux 15 inclinés par rapport au plan frontal de rotation du disque de manière à constituer des biseaux dont l'angle de coupe est approprié à la nature du produit à désiler.

Les moyeux 14 sont constitués par des tubes sur lesquels sont soudées les vis d'Archimède 13 servant pour le chargement du produit dans la benne. Chaque moyeu 14 est monté coulissant axialement sur un arbre 11 implanté dans la traverse 10, l'entraînement en rotation des arbres s'effectuant à partir du tracteur par l'intermédiaire d'un accouplement à cardan ou à genouillères et d'un ensemble de pignons et de chaînes de transmission logé à l'intérieur de la traverse.

Le coulissement des moyeux tubulaires 14 sur les arbres 11 est obtenu au moyen d'un vérin 16 dont le cylindre est fixé en 17 sur une paroi latérale de la benne (voir figure 3), la tige dudit vérin 16 actionnant un levier 18 articulé à une extrémité sur la benne et dont l'autre extrémité est elle-même articulée sur un bras 19 agissant sur le moyeu coulissant 14 au moyen d'une bague ou d'une fourchette 20 qui s'intercale entre deux épaulements ou bagues de butée 21 solidaires dudit moyeu.

Chaque organe de prélèvement extensible selon l'invention est donc essentiellement constitué par un arbre rotatif 11 porté par la traverse basculante 10, et par un moyeu tubulaire 14 emmanché et claveté coulissant sur l'arbre 11, ledit moyeu portant en bout un disque dentelé de désilage 12 et, à sa périphérie, une vis de chargement 13.

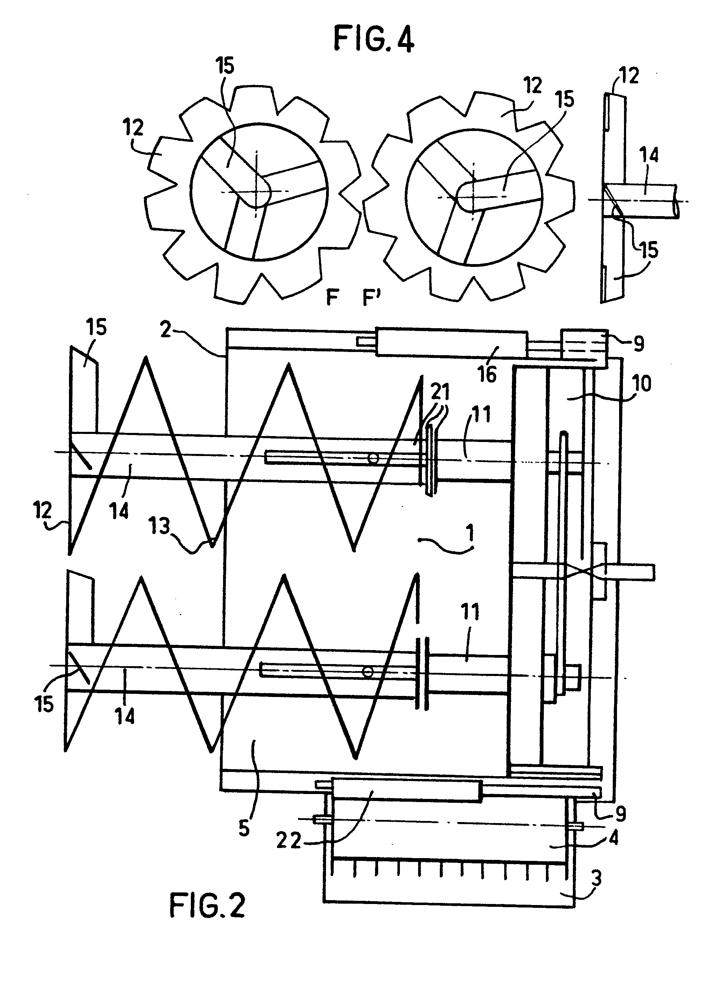

La commande du basculement autour de l'axe 8 de la traverse 10 et des bras de prélèvement associés est assurée par l'intermédiaire d'un vérin 22 (voir figures 1 et 2) dont le cylindre est articulé en 23 sur une paroi latérale de la benne et dont la tige commande la manoeuvre de pivotement de l'ensemble par l'intermédiaire d'un levier 24 solidaire en rotation de la traverse 10.

Bien entendu, les arbres 11 des bras de prélèvement peuvent être articulés sur la traverse 10 autour d'un axe orthogonal à celle-ci de manière à pouvoir pivoter latéralement et balayer l'espace aussi bien horizontalement que verticalement. L'entraînement en rotation des arbres 11 est alors assuré de manière connue à l'aide de joints universels du type cardan et les pivotements latéraux des bras sont assurés par des vérins non représentés.

La machine à désiler selon l'invention peut ainsi comporter indifféremment un ou plusieurs organes de prélèvement extensibles disposés parallèlement et pouvant intervenir sur toute la largeur du silo.

La machine à désiler selon l'invention fonctionne de la manière suivante :

L'opérateur placé sur le tracteur positionne les moyens de prélèvement, c'est-à-dire

0015823

disques dentelés 12 et vis d'Archimède 13, en position haute (figure 1) en agissant sur le vérin 22 de façon à attaquer la partie supérieure du silo. Les disques ou couronnes dentelés 12 formant scies tournent en sens inverse à vitesse lente et découpent le produit ensilé que les vis 13 déplacent en direction de la benne et font tomber sur la porte 5 en position rabattue.

Les bras de prélèvement sont progressivement abaissés sous l'action du vérin 22 dont la tige repousse le levier 24 et le fait pivoter autour de son axe 8 en entraînant du même coup, dans le sens inverse des aiguilles d'une montre sur la figure 1, à la fois la traverse 10 et les organes portés en console par celle-ci.

Lorsque les vis de chargement 13 parviennent en partie basse dans la zone de la porte 5, elles acheminent le produit le long de la rampe inclinée formée par ladite porte et le font pénétrer dans la benne à travers son orifice d'entrée 2.

L'opération complète de chargement de la benne est obtenue par une succession de manoeuvres de basculement, d'extension et de retrait, et éventuellement de pivotement latéral de l'ensemble des bras de prélèvement.

Une action prolongée des vis de chargement 13 permet de compacter le produit dans la benne.

Les figures 5 et 6 représentent une machine à désiler selon l'invention comportant un organe de prélèvement selon un second mode de réalisation. La machine représentée sur ces figures comprend une benne 25 de grande capacité montée sur un châssis roulant 26 et munie à son extrémité avant de moyens d'attelage 27 permettant de l'atteler à un tracteur agricole.

L'organe de prélèvement extensible 28 selon ce second mode de réalisation comporte également un moyeu 14 rotatif portant à une extrémité une couronne dentelée 12 formant scie et une vis de chargement 13 s'enroulant autour dudit moyeu. Le moyeu 13 est prévu de grande longueur, de l'ordre de celle de la remorque sur laquelleil est monté, et il est supporté dans des paliers 31 prévus aux extrémités d'un bâti 30.

L'organe de prélèvement comporte en outre des bras latéraux 34 articulés autour d'un axe de pied 35 à la partie basse de la benne 25, lesdits bras s'articulant à leur partie supérieure à l'extrémité du bâti 30 la plus éloignée de l'organe de coupe 12. Une vis 32/est enroulée autour de la partie du moyeu 14 qui s'étend entre les deux paliers-supports 31 du bâti 30, ladite vis étant destinée à relayer la vis 13 de chargement de manière à répartir le produit désilé sur toute la longueur de la benne.

Le déploiement du moyeu 14 et du bâti 30 par rapport au bras 34 est assuré par des vérins 36 reliant ledit bâti/à chacun des bras 34 et l'oscillation de ces bras par rapport à la benne 25 est commandée par des vérins latéraux 37 articulés sur lesdits bras et sur la benne.

La conjugaison des mouvements de basculement du moyeu 14 et d'oscillation des bras latéraux 34 permet de réaliser les mêmes interventions dans la masse du produit ensilé que celles définies dans l'exemple de réalisation précédent.

On notera que la benne 25 de la remorque comporte également à l'arrière une porte relevable 5 sous l'action d 'un vérin 7, cette porte formant un plan incliné de chargement en position rabattue. L'entraînement en rotation du moyeu 14, de l'outil de coupe 12 et des vis de chargement 13 et 32 est assuré par l'intermédiaire de joints universels à cardan et d'un arbre télescopique de transmission 29.

On notera la grande capacité d'extension de l'organe de prélèvement 28 selon ce second mode de réalisation, qui, du fait qu'il est constitué de parties articulées de grandes dimensions, peut atteindre, une fois déployé, une profondeur de passe voisine de la longueur de la remorque. Ceci permet d'effectuer un chargement complet de la benne simplement en manoeuvrant l'organe de prélèvement et sans avoir à déplacer la remorque une seule fois.

En variante, au lieu d'articuler le bâti 30 et le moyeu tubulaire 14 à l'extrémité de bras oscillants 34 comme dans le dispositif décrit précédemment, il peut être porté par un chariot 39 muni d'un galet 40 circulant dans deux rails ou glissières 41 horizontaux s'étendant latéralement au-dessus des ridelles de la benne ou remorque 25. Tel que représenté sur la figure 6, le bâti 30 qui supporte le moyeu 14 est articulé à une extrémité autour d'un axe horizontal 38 porté par le chariot 39 et le basculement du bâti par rapport audit chariot est commandé par un vérin 42 articulé sur ceux-ci.

Selon cette variante, la machine à désiler comporte toujours des bras latéraux oscillants 34 articulés à leur base autour d'un axe 35 au niveau du plancher de la benne et manoeuvrés par des vérins latéraux 37, lesdits bras oscillants 34 ayant leurs extrémités supérieures reliées au chariot 39 par l'intermédiaire de bielles 43.

Le fonctionnement de l'organe de prélèvement selon cette variante se comprend aisément. La remorque étant reculée contre le front de taille du produit à désiler et la porte 5 étant rabattue de façon à former un pan incliné, l'organe de prélèvement 28 est progressivement déployé en arrière de la remorque en faisant pivoter les bras latéraux 34 vers l'arrière à l'aide des vérins 37, ce qui a pour effet de repousser le chariot 39 ainsi que le bâti 30 et les outils de coupe et de chargement vers l'arrière de la remorque. Simultanément, le bâti 30 est animé d'un mouvement de basculement vertical à l'aide des vérins 42 de manière à ce que l'outil frontal de coupe 12 découpe le produit ensilé sur toute la hauteur du front de taille, le produit découpé étant repris et transféré dans la benne par les vis de chargement 13 et 32.

Comme précédemment, du fait que, lorsque le chariot 39 est repoussé dans sa position arrière maximum, le bras de prélèvement s'étend vers l'arrière de la remorque sur une longueur voisine de la longueur de celle-ci, il est possible d'effectuer un chargement complet de la benne sans avoir à la déplacer et uniquement par des mouvements d'extension, de basculement et de pivotement du bras de prélèvement.

Tel que représenté sur les figures 7 et 8, la machine à désiler selon l'invention peut également être équipée d'une autre variante de l'organe de prélèvement extensible articulé. Comme représenté,cette autre variante du bras de prélèvement équipe une benne de transport 1 identique à celle

0015823

représentée sur les figures 1 à 3, ladite benne comportant également un orifice d'entrée 2, une porte basculante 5 formant plan incliné de chargement, un tapis transporteur 3 et un distributeur-éparpilleur du type hérisson 4.

Parallèlement à l'arête supérieure de la benne est monté un axe horizontal 8 tourillonnant sur deux paliers 9 soudés sur ladite arête. L'organe de prélèvement articulé monté sur la benne est lui-même constitué de deux bras latéraux identiques parallèles 44 montés pivotants autour de l'axe 8 sur la benne 1 et solidaire en rotation du bras de levier latéral 24 actionné comme précédemment par l'intermédiaire du vérin latéral 22 articulé en 23 sur la benne 1.

Un châssis 45 de forme générale rectangulaire est articulé en bout des bras 44 autour d'un axe transversal sensiblement horizontal 46, ledit châssis 45 portant à son extrémité inférieure deux disques de coupe 47 parallèles, se recouvrant partiellement et munis de dents périphériques 48 (figure 9). Les disques de coupe 47 sont entraînés en rotation en sens opposé au moyen d'un système de transmission classique par chaîne et pignon reliés à la prise de force du tracteur, par exemple par un arbre de transmission articulé par cardan s'étendant entre les deux bras 44.

Un vérin d'actionnement 49 s'étend au-dessus de l'un des bras latéraux 44, sensiblement parallèlement à celui-ci, et est articulé à une extrémité sur la benne 1 autour d'un axe 50 situé au-dessus de l'axe 8 et à l'autre extrémité à la partie supérieure du châssis 45 autour d'un axe 51. Le développement ou la contraction du vérin 49 provoque la rotation du châssis 45 autour de son axe 46 à l'extrémité des bras 44.

A noter que l'axe d'articulation 50 du vérin 49 sur la benne 1 est positionné en un endroit bien déterminé assurant un parallélisme aux disques dans leur descente conduisant à une coupe verticale du produit ensilé.

Derrière les disques de coupe 47 est disposé un rateau ou herse formé d'une traverse 52 munie à sa partie inférieure de dents ou griffes 53 régulièrement réparties le long de celle-ci, ladite traverse comportant à sa partie supérieure, et dirigées vers le haut, deux coulisses latérales 54 pouvant coulisser sur les deux montants latéraux du châssis 45 servant de glissière. Un vérin 55 articulé à une extrémité sur la traverse haute 56 du châssis 45 et à son autre extrémité sur la traverse 52 de la herse ou rateau permet d'actionner celui-ci et de le déplacer de telle sorte que les dents 53 dépassent au-dessous des disques 47 ou au contraire s'escamotent derrière ces disques (voir figure 9). Le rateau est utilisé en fin de chargement pour le ramassage au sol du produit ensilé n'ayant pu être prélevé par les disques du fait de leur forme circulaire et du fait également qu'on arrête leur descente avant qu'ils n'aient atteint le sol pour éviter de détériorer la coupe des dents 48.

Le dispositif de prélèvement selon cette variante fonctionne de la manière suivante :

En début de désilage (voir figure 7), le vérin 22 est rétracté, ce qui provoque le soulèvement des bras 44 ainsi que du châssis 45 et des disques 47 associés. Dans cette position, le vérin 55 est rétracté et le rateau est remonté de telle sorte que ses dents 53 s'escamotent derrière les disques de coupe 47. Le châssis 45 est alors actionné dans un mouvement de bascule par le vérin 49 qui s'allonge et se rétracte successivement tandis que les bras 44 sont progressivement abaissés de manière à couper le produit ensilé sur toute la hauteur du front de taille.

La descente des bras 44 est arrêtée avant que les disques 47 ne touchent le sol (voir figure 8) et le vérin 55 se met en extension de manière à repousser la herse  tel  que les griffes ou doigts 53 de celle-ci dépassent légèrement au-dessous de la partie/la plus basse des disques 47.  Le châssis 45 est alors animé d'un mouvement de balancement imprimé par le vérin 49 commandé à distance à partir du tracteur. Par ce mouvement de grattage, le rateau fait pénétrer le produit dans la benne en le faisant remonter le long du plan incliné formé par la porte 5, le rateau effectuant à la fois le ramassage et le nettoyage du sol au pied du front de taille du produit ensilé.

La machine à désiler selon l'invention est également équipée d'un dispositif distributeur-é-partilleur 4 à dents rétractables tel que représenté sur les figures 10 et 11.

Ce dispositif distributeur est essentiellement constitué par deux bouts d'arbres opposés alignés 45 montés fixe sur le bâti de la machine ou sur la benne et sur lesquels un tambour 50 est monté tournant. A l'intérieur dudit tambour et à l'extrémité de chaque bout d'arbre 45 est fixé un  flasque excentrée 44, les deux flasques étant disposés  en vis-à-vis l'un de l'autre et reliés par un axe longitudinal fixe 46 parallèle à l'axe des deux bouts d'arbre 45 et déportés par rapport à celui-ci. Un peigne 47 longitudinal est monté pivotant autour de l'axe fixe 46 par l'intermédiaire de paliers d'extrémité 48, ledit peigne 47 s'étendant parallèlement à l'axe fixe 46 et étant équipé de dents ou griffes 49 orientées radialement et régulièrement réparties le long dudit peigne.

La virole cylindrique du tambour horizontal 50 monté rotatif sur les arbres 45 comporte des orifices 51 ménagés en face des griffes ou dents 49 et autorisant le passage de ceux-ci vers l'extérieur tel que représenté sur la figure 11. Le tambour 50 est entraîné en rotation par l'intermédiaire d'un pignon 52 solidaire de l'un des flasques latéraux dudit tambour dont le mouvement entraîne la rotation des dents 49 et du peigne 47 autour de l'axe fixe 46.

La longueur des griffes ou dents 49 est choisie telle que la distance entre leurs extrémités et l'axe 46 n'excède pas la somme de l'excentration dudit axe par rapport à l'axe du tambour augmentée du rayon de celui-ci. Il en résulte que, lors de leur retrait maximum, les dents 49 sont totalement rétractées à l'intérieur du tambour 50 et leurs extrémités affleurent la périphérie de la virole dudit tambour, ce qui facilite la libération du produit distribué et son éjection hors de la machine, surtout lorsqu'il s'agit d'un produit fibreux tel que par exemple du fourrage.

Bien entendu, la portée de l'invention n'est pas limitée aux seuls modes particuliers décrits précédemment à titre d'exemple non limitatif, mais elle couvre également toute variante qui ne différerait que par des détails de construction.

## REVENDICATIONS

1. Machine à désiler un produit stocké, notamment en silo horizontal, tel qu'un produit d'alimentation du bétail, ladite machine comportant une benne de transport, au moins un organe de prélèvement du produit articulé sur la benne, des moyens de chargement dudit produit dans la benne et des moyens de distribution de celui-ci sur les lieux de déchargement, caractérisée en ce que l'organe de prélèvement (11-14, 30-34, 44-45) est extensible et porte les moyens de chargement (13, 13-32, 52-53) du produit désilé, et en ce que lesdits moyens de distribution comportent un hérisson d'épandage (4).

2. Machine à désiler selon la revendication 1, caractérisée en ce que l'organe de prélèvement est essentiellement constitué par un bras télescopique (11, 14) articulé sur la benne à une extrémité et muni à son autre extrémité d'un disque de coupe rotatif (12), et en ce qu'elle comporte des moyens (16, 18, 19, 20) pour commander l'extension dudit bras.

3. Machine à désiler selon la revendication 1, caractérisée en ce que l'organe de prélèvement est essentiellement constitué par au moins un bras formé de plusieurs parties articulées entre elles, (30-34, 30-34-43, 44-45) ledit bras étant articulé sur la benne (1) à une extrémité et muni d'au moins un disque de coupe (12) à son autre extrémité, et en ce qu'elle comporte des moyens (36-37, 22-49) pour déployer et rétracter les différentes parties articulées du bras.

4. Machine à désiler selon l'une quelconque des revendications 1 à 3, caractérisée en ce que les moyens de chargement sont essentiellement constitués par au moins une vis rotative (13, 32) portée en arrière du disque de coupe (12) par la partie la plus extérieure du bras de prélèvement.

5. Machine à désiler selon la revendication 3, caractérisée en ce que les moyens de chargement sont essentiellement constitués par une herse ou rateau (52,53) montée en arrière du disque de coupe (12) par la partie la plus extérieure du bras de prélèvement.

6. Machine selon la revendication 5, caractérisée en ce que la herse ou rateau (52,53) est rétractable et escamotable derrière les organes de coupe (12).

7. Machine selon l'une quelconque des revendications 1 à 6, caractérisée en ce que le hérisson d'épandage (4) comporte des griffes ou dents (49) rétractables.

8. Machine selon la revendication 7, caractérisée en ce que le hérisson d'épandage est essentiellement constitué par un tambour rotatif (50) dont la virole comporte des perforations (51) et par un peigne (47) logé à l'intérieur du tambour et tournant autour d'un axe fixe (46) parallèle et excentré par rapport à l'axe dudit tambour, les dents (49) du peigne étant engagées dans les perforations (51) de la virole.

9. Machine selon la revendication 8, caractérisée en ce que la distance entre l'extrémité des dents (49) du peigne (47) et l'axe fixe (46) n'excède pas la somme de l'excentration dudit axe à l'axe du tambour (50) augmentée du rayon de celui-ci.

FIG. 1

FIG.4

FIG.2

FIG.3

FIG.5

FIG.6

FIG.7

FIG.8

FIG.11

**FIG.9**

**FIG.10**

## DOCUMENTS CONSIDERES COMME PERTINENTS

| Catégorie | Citation du document avec indication, en cas de besoin, des parties pertinentes | Revendication concernee |
|---|---|---|
| | <u>FR - A - 2 263 961</u> (JAGER)<br>* Pages 4,5; figures 1,2,3 *<br><br>-- | 1,3,5 |
| | <u>FR - A - 2 331 970</u> (STORTI)<br>* Page 1, dernier paragraphe; page 2; page 3, page 4; figures 1,2,3,4 *<br><br>-- | 1,3 |
| D | <u>FR - A - 2 231 302</u> (LUCAS)<br>* Page 2, lignes 10-38; page 3, figures 1,2,3 *<br><br>-- | 1,4 |
| | <u>DE - B - 2 810 366</u> (BRUNNHUBER)<br>* Colonne 4, lignes 36-68; colonne 5; colonne 6; colonne 7; colonne 8; figures 1-8 *<br><br>-- | 1,2 |
| | <u>US - A - 2 768 760</u> (PILCH)<br>* Colonne 1, lignes 65-72; colonne 2; colonne 3, lignes 1-52; figures 1-6 *<br><br>-- | 1,2,5 |
| | <u>US - A - 3 847 266</u> (COX)<br>* Colonne 3, lignes 4-37; figures 1,2,4 *<br><br>-- | 1,3 |
| | <u>LU - A - 79 972</u> (WESTBROCK)<br>* Page 4; page 5, page 6; page 7; figures 1,2,3 *<br><br>-- ./. | 1,3,4 |

**CLASSEMENT DE LA DEMANDE (Int. Cl. 3)**

A 01 F 25/20
E 02 F 3/81

**DOMAINES TECHNIQUES RECHERCHES (Int. Cl. 3)**

A 01 F
A 01 D
E 02 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 30-05-1980 | VERMANDER |

OEB Form 1503.1 06.78

Office européen
des brevets

**RAPPORT DE RECHERCHE EUROPEENNE**

0015823

Numéro de la demande

EP 80 40 0267

-2-

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | **FR - A - 1 274 808** (DEERE-LANZ)<br>* Page 2, colonne de droite, paragraphes 11,12; page 3; figures 1,2,3,4,5 *<br><br>---- | 7,8,9 | |
| | | | **DOMAINES TECHNIQUES RECHERCHES (Int. Cl. ³)** |

OEB Form 1503.2   06.78